# EUROPÄISCHE PATENTSCHRIFT

(11) **EP 2 385 030 B1**
(45) Veröffentlichungstag und Bekanntmachung des Hinweises auf die Patenterteilung: **10.09.2014**
(21) Anmeldenummer: 10161717.3
(22) Anmeldetag: 03.05.2010
(51) Int. Cl.: C04B 40/06, C04B 103/00, C04B 111/00, C04B 28/02, C04B 28/26

(54) **Emissionsfreie Klebstoffzusammensetzung**
Emission-free adhesive compound
Composition d'adhésif sans émissions

(43) Veröffentlichungstag der Anmeldung: 09.11.2011
(73) Patentinhaber: nolax AG, 6203 Sempach Station (CH)
(72) Erfinder: Schwotzer, Willi, 6206 Neuenkirch (CH); Huber, Karl, 6206 Neuenkirch (CH)
(74) Vertreter: Hepp Wenger Ryffel AG

(56) Entgegenhaltungen:
- EP-A1- 0 968 977
- EP-A1- 1 238 958
- EP-A1- 1 721 840
- EP-A2- 1 918 263
- DE-A1- 3 235 095
- DE-A1- 10 101 314
- DE-A1- 10 150 600
- DE-A1- 10 150 601
- KR-B1- 100 806 973

## Beschreibung

Die vorliegende Erfindung betrifft eine Klebstoffzusammensetzung, die Verwendung dieser Zusammensetzung zum Verkleben von Faserplatten sowie ein Verfahren zum Verkleben von Faserplatten.

Gips- und Zementfaserplatten sind gebräuchliche Ausbauplatten im Innenbereich. Sie dienen als Wand- und Deckenbekleidung, als Decklage von Unterdecken sowie für die Bekleidung von Montagewänden. Sie sind nicht brennbar und können auch in Feuchträumen verwendet werden. In der modernen Holzrahmenbauweise, beim Fertighausbau und im Trockenbau finden homogene und schwere Faserplatten als mittragende oder aussteifende Beplankungen Verwendung.

Für die Montage solcher Platten kommen verschiedene Klebstoffe zur Anwendung. Sie werden in pastöser Form in die Stossfugen eingebracht und verbinden die einzelnen Elemente stoffschlüssig. Die Klebstoff-Fugen müssen sowohl adhäsiv wie kohäsiv mindestens gleich stark belastbar sein wie die Faserplatten. Im Aussenbereich und in Nasszonen müssen sie zudem über eine Wasserfestigkeit verfügen, welche den Baustoffen Gips und Zement ebenbürtig ist. Um ihre Funktion als Stossfugen zu erfüllen, müssen sie über eine gewisse Elastizität verfügen, um Schubkräfte zwischen den Platten aufzunehmen oder Vibrationen zu absorbieren. Ihre chemische Zusammensetzung sollte die intrinsische Flammwidrigkeit der Plattenmaterialien und damit deren vorteilhaftes Brandverhalten nicht kompromittieren.

Heutzutage bevorzugt die Fachperson auf der Baustelle Klebstoffe auf Basis von feuchtigkeitshärtenden Polyurethanen, weil diese Produktgruppe die oben zitierten Kriterien erfüllen. Zudem ist ihre Darreichungsform, pastöse Klebstoffraupen aus Kartuschen, äusserst praktisch und zweckdienlich.

Neuste Erkenntnisse betreffend mögliche gesundheitliche Risiken haben nun dazu geführt, dass für Montageklebstoffe auf Polyurethanbasis Einschränkungen beim Verkauf zur Anwendung gelangen.

Diese marktnachteiligen Restriktionen haben intensive Entwicklungsarbeiten in der Klebstoffbranche ausgelöst mit dem Ziel, kennzeichnungsfreie Produkte zu erhalten. Es hat sich gezeigt, dass den meisten Lösungsansätzen der Nachteil anhaftet, dass sie technisch und/oder ökonomisch den Polyurethanen unterlegen sind.

Wasserbasierte Klebstoffe, insbesondere solche, die auf Dispersionen aus thermoplastischen Polymeren beruhen, werden wegen ihrer gesundheitlichen und ökologischer Unbedenklichkeit, aber auch wegen ihrer anwendungstechnischen Vorteile oft in Bauanwendungen eingesetzt. Sie unterliegen jedoch gewissen Einschränkungen in Bezug auf ihre Wasserfestigkeit, ihr Brandverhalten und ihre Thermoplastizität (Kriechen unter Dauerlast). Auch ist das Eindringverhalten in Haar-Risse ungenügend, sodass oft so genannte Primer zum Einsatz gelangen, die in einem separaten Arbeitsgang appliziert werden. Damit können brüchig-spröde Oberflächen vor der Applikation von Dispersionsklebstoffen stabilisiert werden.

Andererseits ist bekannt, dass zementgebundene Mörtel auch ohne vorgängiges Primern gute Haftung auch zu unstabilen mineralischen Oberflächen aufbringen können. Ausserdem sind zementgebundene Massen nach der Aushärtung wasserfest; selbst der Abbindeprozess wird durch die Anwesenheit von Wasser nicht verhindert. Wässrige Zementschlämme enthalten zu Beginn der Abbindereaktion eine flüssige oder gelartige Phase (Zementleim), die geeignet ist, in feinste Poren und Haar-Risse einzudringen. Zudem werden Klebstoffe aus Zement und andern hydraulisch abbindenden mineralischen Bindemitteln im Brandschutzbereich eingesetzt, beispielsweise in Holzverbundwerkstoffen oder zur Fixierung von Steinwolle.

Der Nachteil der bekannten Zementklebstoffe liegt in der sehr hohen Sprödigkeit der daraus gebildeten Klebstoff-Fuge. Dies führt bereits bei geringen dynamischen Belastungen zum sog. katastrophalen Bruch-Versagen.

DE 101 01 314 A1 beschreibt emissionsarme Ein-Komponenten-Klebstoffe, welche Portlandzement und ein zementalkalisch beständiges Copolymerisat enthalten. Nicht offenbart wird die Verwendung zur Verklebung von Faserplatten miteinander.

EP 1 238 958 A1 beschreibt einen Trockenmörtel, der Zement und ein redispergierbares Polymerpulver enthält; eine Verwendung zur Verklebung von Faserplatten wird nicht offenbart.

KR 100 806 973 81 beschreibt die Verwendung einer Zusammensetzung aus Vinylacetat zum Verkleben von Faserplatten; die Zusammensetzung enthält jedoch kein hydraulisch härtendes Bindemittel auf Silikatbasis.

Es ist daher eine Aufgabe der Erfindung, ein Klebstoff-System bereit zu stellen, welches vergleichbare Eigenschaften wie Polyurethanklebstoffe aufweist, aber keine monomere Isocyanate wie MDI, TDI, etc. beinhaltet.

Diese Aufgabe wird gelöst mit einer Trockenmasse zur Herstellung einer Klebstoffzusammensetzung gemäss Anspruch 1.

Die erfindungsgemässe Trockenmasse zur Herstellung einer Klebstoffzusammensetzung zum Verkleben von Faserplatten miteinander ist insbesondere pulverförmig sowie mit Wasser anrührbar, und umfasst:
- ein zementalkalisch beständiges, redispergierbares Polymer Pulver, insbesondere in einem Anteil von mehr als 30 Gew.-%, vorzugsweise von mindestens 35 Gew.-%, besonders bevorzugt von mindestens 40 Gew.-%;
- mindestens ein hydraulisch härtendes Bindemittel auf Silikatbasis, vorzugsweise Zement;
- optional Wasserglas.

Unter "zementalkalisch" wird hierbei der alkalische pH Wert verstanden, den eine gebrauchsfertige Aufschlämmung von Zement aufweist.

In der Bauchemie sind pulverförmige Klebstoffe auf Basis kunststoffvergüteter hydraulisch abbindender Bindemittel auf Silikatbasis, insbesondere Zement bekannt und finden u.a. als Fliesenklebstoffe Verwendung. Ebenfalls bekannt sind derartige Pulverklebstoffe zum Verkleben von Parkett. DE 10101314 A1 beispielsweise offenbart derartige Anwendungen. Jedoch sind die Klebeanforderungen bei den bekannten Anwendungen kunststoffvergüteter Zementmassen grundsätzlich verschieden von derjenigen von Gips-oder Zementfaserplatten im Innenausbau. Während sowohl Fliesen wie Parkettelementen auf eine stabile Unterlage (Wand oder Unterboden) angeklebt werden, sind Wandelemente freistehend. Daraus resultieren Biegekräfte, welche auf die Klebstoff-Fugen wirken, was bei den ersteren Anwendungen nicht der Fall ist. Es ist daher nicht überraschend, dass Klebeversuche an Gipsfaserplatten unter Verwendung von handelsüblichen zementösen Pulver-Parkettklebstoffen zu ungenügenden Resultaten führten. Die Klebstoff-Fuge erwies sich als viel zu spröde, und die Bruchkante verlief in der obersten Schicht der Faserplatte (Bruch in der Grenzschicht) .

Die Hauptursachen für die obigen Schwierigkeiten liegen beim Baustoff Gips selbst begründet. Der Verbund innerhalb der Gipsmatrix kommt nämlich dadurch zu Stande, dass sich beim Abbindevorgang des Gipses Nadeln bilden, die sich innig miteinander verzahnen. Diese filzähnliche Struktur wird einerseits durch Wassereinfluss geschwächt. Andererseits ist sie wenig geeignet, um Kraftspitzen zu dissipieren oder abzuleiten. Werden Verbindungen zwischen Gipselementen auf Schlag beansprucht, kommt es daher notorisch in den Grenzflächen zu sprödem Bruch. Dieses Phänomen tritt bei denjenigen Klebstoffen seltener auf, welche über einen Überschuss an mobilem niedrigviskosen Isocyanatmonomer verfügen, weil diese Monomere in die Poren der Gips-Grenzschicht einzudringen vermögen und dort durch feuchtigkeitsinduzierte Ausreaktion zu elastisch-verfestigten, stabilen Interpenetrationszonen von Gips und Polyurethan führen. Monomerarme Klebstoffe hingegen bleiben an der Oberfläche liegen und haften durch reine Adhäsionskräfte auf der Gips-Grenzschicht, ohne jedoch letztere zusätzlich zu stabilisieren.

Bevorzugt ist das mindestens eine hydraulisch härtendes Bindemittel auf Silikatbasis ein Zement.

Durch die Kombination eines Zementmörtelsystems insbesondere mit einem Anteil von über 30 Gew.-% eines Polymerpulvers, insbesonder eines thermoplastischen Kunststoffs , wurde beim Verkleben von Mineralfaserplatten, wie beispielsweise Gips- oder Zementplatten, eine unerwartete und überraschend gute Klebkraft (Adhäsion und Kohäsion) gefunden, welche dadurch charakterisiert ist, dass im Bruchversuch das Versagen mehrere Millimeter tief im Innern der Gipsmatrix (sogenannter Materialbruch) erfolgt. Dies muss in dem Sinn interpretiert werden, dass die mit Kunststoff vergütete Zementformulierung zusammen mit dem Material der Gipsfaserplatte ein interpenetrierendes Netzwerk ausbildet, welches die Vorteile des Kunststoffes (Elastizität) mit denjenigen des Zementes (Wasserfestigkeit) vereint. Anwendungsbezogen sind die mechanische Eigenschaften besser als diejenigen der Gipsfaserplatte, wodurch die Eignung als Fugenklebstoff gegeben ist.

Besonders bevorzugt ist die Klebstoffzusammensetzung dabei ein Einkomponenten-Pulverklebstoff, dem kurz vor Anwendung eine wohldefinierte Menge Wasser beigemischt wird. Es bildet sich dabei eine homogene, geschmeidige Klebemasse, welche als standfeste Raupe mit traditionellem Werkzeug aufgebracht werden kann.

Das in der Klebstoffzusammensetzung vorhandene Polymer-Pulver erfüllt mehrere Aufgaben. Zum einen werden dadurch die Adhäsion des Klebstoffes und die Kohäsion des Fugenmaterials erhöht. Zum andern zeichnet sich die ausgehärtete Fuge wegen der erfindungsgemäss hohen Kunststoffanteilen durch eine höhere Flexibilität aus.

Bevorzugt ist das Polymer-Pulver in einer Konzentration von 40 Gew.-% bis 60 Gew.-% vorhanden. Bei dieser Konzentration weist die Klebstoffzusammensetzung besonders gute Hafteigenschaften auf. Alle Gewichtsprozente beziehen sich auf die trockene Masse vor einer etwaigen Wasserzugabe.

Überraschenderweise sind die Unterschiede, welche zwischen verschiedenen Polymer-Pulver resultieren, beträchtlich. Aus diesem Grund wurden Polymere unterschiedlicher Komposition vergleichend getestet. Die besten Resultate wurden mit Dispersionspulvern auf Basis Äthylen-/Vinylacetat-Copolymeren erzielt mit Anteilen zwischen 40 und 60 Gew.-% an der trockenen Mischung.

Weiter kann die Zubereitung funktionale Additive, wie beispielsweise Celluloseäther zur Steigerung des Wasserrückhaltevermögens; Rheologie-Modifikatoren wie Bentonite, pyrogene Kieselsäuren, Stärken; sowie Additive zur Kontrolle der Abbindezeit enthalten. Beispielsweise kann es von Vorteil sein, die Reaktion des Zementleimes mit dem Gips (Ettringitbildung) durch Weinsäure zu verzögern oder/und den späteren Abbindeprozess durch Formiat-Ionen zu beschleunigen. Die Zugabe dieser weiteren Stoffe ermöglicht eine je nach Anwendung spezifische Anpassung einzelner Parameter des Klebstoffs.

Das redispergierbare Polymer-Pulver umfasst bevorzugt Vinyl-CoPolymere.

Der Anteil des hydraulisch härtenden Bindemittels auf Silikatbasis beträgt bevorzugterweise zwischen 40 Gew.-% und 70 Gew.-%. Bevorzugt wird kommerziell erhältlicher Weisszement eingesetzt, beispielsweise Albaro 5 CEM I 52.5 N white (erhältlich bei Holcim AG, Schweiz).

Bevorzugt besteht die Klebstoffzusammensetzung aus einer pulverförmigen Zubereitung eines Gemischs aus 40 Gew.-% bis 60 Gew.-% Dispersionspulver eines oder mehrerer Polymere, beispielsweise Elotex ST 2400 (Elotex AG, Schweiz), 67 - 37% handelsüblichem Zement (Portlandzement, Weisszement, Tonerdeschmelzen, etc) und 3 % Additiven zur Steuerung von Rheologie, Abbindeverhalten und Wasserrückhaltevermögen.

Eine weitere Aufgabe der vorliegenden Erfindung ist es, das Verkleben von Mineralfaserplatten mit einem Klebstoff zu verkleben, der gesundheitlich unbedenklich und unbrennbar ist sowie über hohe Adhäsions- und Kohäsionskräfte verfügt. Diese Aufgabe wird mit der Verwendung einer erfindungsgemässen Klebstoffzusammensetzung nach Anspruch 5 gelöst.

Faserplatten lassen sich besonders gut mit einer erfindungsgemässen Klebstoffzusammensetzung verkleben. Die Adhäsionseigenschaften des Klebstoffs auf die Faserplatten sind dabei ähnlich wie diejenigen von Polyurethanklebstoffen. Dabei weist die erfindungsgemässe Zusammensetzung jedoch weder VOCs noch Isocyanat-Monomere auf, was die Anwendung gesundheitlich unbedenklich macht. Durch den mineralischen Charakter der Zusammensetzung wird auch ein gegenüber organischen Klebstoffen überlegenes Brandverhalten erreicht. Zudem weist die Zusammensetzung einerseits nicht die Sprödigkeit eines reinen Zementmörtels auf und andererseits weist gegenüber herkömmlichen Zementmörtelsystemen eine deutlich gesteigerte Adhäsion auf. Gegenüber reinen Dispersionsklebstoffen zeichnen sich die erfindungsgemässen Zusammensetzungen durch eine hohe Wasserfestigkeit und fehlendes Kriechverhalten unter Dauerlast aus.

Die erfindungsgemässe Klebstoffzusammensetzung wird bevorzugt zum Verkleben von Gips- und/oder Zementfaserplatten verwendet.

Eine weitere Aufgabe der vorliegenden Erfindung liegt darin, ein Verfahren zum Verkleben von Mineralfaserplatten bereit zu stellen. Diese Aufgabe wird durch ein Verfahren gemäss Anspruch 7 gelöst.

Beim erfindungsgemässen Verfahren werden Mineralfaserplatten unter Verwendung der erfindungsgemässen Klebstoffzusammensetzung verklebt.

Die Klebstoffzusammensetzung wird dabei zunächst unter Zugabe von Wasser zu einer Paste verarbeitet. Die Paste lässt sich danach einfach auf die Faserplatten auftragen.

Bevorzugt wird beim erfindungsgemässen Verfahren die Klebstoffzusammensetzung mit Wasser im Verhältnis ca. 3:1 vermischt.

Bei der Darreichungsform muss berücksichtigt werden, dass hydraulische Bindemittel, beispielsweise Zement, per definitionem mit Wasser reagieren und daher erst kurz vor der Applikation mit Wasser angemischt werden können. Trotzdem soll bevorzugt im Rahmen der Erfindung zur Sicherstellung der Qualität das Mischverhältnis aller Komponenten durch Vorfertigung festgelegt sein. Auf der Baustelle sind damit keine Verwiegungs- oder Dosierungsschritte mehr notwendig. Diese Anforderung wird durch ein Doppelkammer-Gebinde erfüllt. In der einen Kammer befindet sich der Zement mit geeigneten Zusätzen, in der anderen das Wasser mit geeigneten Zusätzen; selbstverständlich ist es auch möglich, die für das Wasser vorgesehene Kammer leer zu belassen und erst beispielsweise auf der Baustelle mit Wasser auffüllen zu lassen (bspw. bis zum Rand, um Anwendungsfehler zu minimieren). Durch diese Variante kann Transportgewicht und damit Kosten gespart werden. Die Kunststoffkomponente kann prinzipiell zwei Formen vorliegen:
a) als pulverförmiges, in Wasser redispergierbares Pulver, welches dem Zementgemenge beigemischt ist. Diese Trockenmischung gemäss Anspruch 1 ist mit Wasser anrührbar und ergibt einen erfindungsgemässen Klebstoff.
b) Alternativ kann die Kunststoffkomponente auch in Form einer notorisch bekannten Dispersion bereitgestellt werden. In diesem Fall enthält die Kammer 1 den Zement und die Kammer 2 die Kunststoffdispersion, wahlweise je mit unreaktiven Additiven.

Zur Mischung der in den Kammern getrennt bevorrateten Komponenten kann eine Trennungsvorrichtung zwischen den Kammern mit an sich bekannten Mitteln derart manipuliert werden, dass die Komponenten miteinander in Kontakt treten und derart miteinander vermischt werden können, dass ein erfindungsgemässer Klebstoff entsteht. Bei der Trennungsvorrichtung kann es sich bspw. um eine herausnehmbare Trennwand, eine perforierbare Folie o. dgl. handeln. Geeignete Ausführungsformen derartiger Doppelkammer-Gebinde sind dem Fachmann an sich geläufig.

Vorstehend wurde ausführlich die pulverförmige Variante a) beschrieben, weil sie gegenüber der Dispersionsvariante b) den Vorteil grösserer Kältetoleranz aufweist. Wird nämlich die Verpackung ohne Wärmeschutz bei Temperaturen unterhalb des Gefrierpunktes gelagert, wird das Material in der Wasser enthaltenden Kammer gefrieren. Blosses Wasser kann schadlos wieder aufgetaut werden, während eine Kunststoffdispersion solche Frost-/Tauzyklen nicht schadlos überstehen wird.

Die Erfindung wird nachfolgend anhand eines Ausführungsbeispiels näher beschrieben, ohne dass der Gegenstand der Erfindung auf diese Ausführungsform zu beschränken wäre.

### Beispiel

Klebstoffzusammensetzung:

| | |
|---|---|
| Weisszement Albaro 5 CEM I 52.5 white | 57.40 Gew.-% |
| (Holcim AG, Schweiz) | |
| | |
| Calziumformiat | 1.30 Gew.-% |
| (Sigma, Schweiz) | |
| | |
| Dispersionspulver Elotex ST 2400 | 40.00 Gew.-% |
| (Elotex AG, Schweiz) | |
| | |
| Weinsaure | 0.10 Gew.-% |
| | |
| Celluloseather Tylose MH 2000YP2 | 0.20 Gew.-% |
| (SE Tylose GmbH & Co KG, Deutschland) | |
| | |
| Aerosil 200 | 1.00 Gew.-% |
| (Evonik, Deutschland) | |

Die Pulvermischung wird unter Zugabe von ca. 30 Teilen Wasser zu einer standfesten Paste verarbeitet. Dies kann auf verschiedene Arten erfolgen.
a) Die Paste kann in einem offenen Gefäss mit Hilfe eines Rührwerkzeuges angerührt. Alternativ können die abgemessenen Pulver-und Wassermengen in einem teilweise gefüllten und mit einem Deckel versehenen Kunststoffgefäss durch intensives Schütteln vermengt werden. In beiden Fällen wird die resultierende Paste mittels eines Spachtels aufgebracht. Diese Auftragsmethode mag zwar einem Laien nahe liegen, wird hingegen vom Praktiker auf der Baustelle abgelehnt, weil sie keine exakte Dosierung und Platzierung der Klebstoff-Fuge erlaubt. Auch müssen Spachtel und Anmachgefässe nach jeder Portion, d.h. ca. alle 30 Minuten, gründlich gereinigt werden.
b) Zur Vermeidung dieses Nachteils wurde die erfindungsgemässe Zubereitung durch geeignete Additive so formuliert, dass sie mittels geringer Knet- oder Walkbewegungen mit dem Anmachwasser zu einer Paste verarbeitet werden kann. Dieser Prozess wird vorzugsweise direkt im Liefergebinde ausgeführt, welches vorzugsweise identisch ist mit dem späteren Anwendungsgebinde. Der Beutel mit der fertig gekneteten Formulierung wird in eine Kartuschen-Hülse mit vormontierter Applikationsdüse eingebracht wird. Mittels einer Kartuschen-Pistole wird der Beutel gegen die Applikationsdüse gedrückt, wodurch der Beutel angezapft und die Paste durch die Düse in die Faserplattenfuge eingebracht wird. Sowohl der Schlauchbeutel wie die Applikationsdüse können als Einweg-Teile konzipiert werden.

Bruchdehnungen von 1mm-Fugen waren bei Formulierungen mit einem Kunststoffanteil von 40% doppelt so hoch wie bei analogen Fugen aus Parkett-Pulverklebstoff. Die Bruchfestigkeiten, bestimmt nach einer internen Norm für Zugprüfungen, waren mit 23 MPa deutlich höher als beim Parkettklebstoff Ardex P 410 (16 MPa), der als Vergleichsprodukt getestet wurde. Die Resultate einer 3-Punkt-Biegeprüfung entsprechen ebenfalls den gestellten Anforderungen. Hier wies die erfindungsgemässe Formulierung einen Traverseweg von 1.0 mm bei einer maximalen Druckkraft von 212 N auf, während der o.g. Parkettklebstoff bei einem Traverseweg von 0.8 mm 325 N Druckkraft aufbrachte.

Vorzugsweise weisen die erfindungsgemässen Formulierungen im Zeitstand-Biegeversuch bei Dreipunkt-Belastung gemäss DIN EN ISO 899-2 (2003) Werte von < 300 N (1 mm Traverseweg) auf, vorzugsweise von < 275 N (1 mm Traverseweg), ganz besonders bevorzugt von < 250 N (1 mm Traverseweg).

## Patentansprüche

1. Verwendung einer Zusammensetzung, insbesondere Trockenmasse, umfassend:
- ein zementalkalisch beständiges, redispergierbares Polymer Pulver, insbesondere in einem Anteil von mehr als 30 Gew.-%, vorzugsweise von mindestens 35 Gew.-%, besonders bevorzugt von mindestens 40 Gew.-%; und
- mindestens ein hydraulisch härtendes Bindemittel auf Silikatbasis, vorzugsweise Zement;
- optional Wasserglas;
in mit Wasser angemachtem Zustand als Klebstoffzusammensetzung zum Verkleben von Faserplatten miteinander.

2. Verwendung gemäss Anspruch 1, **dadurch gekennzeichnet, dass** die Faserplatten Mineralfaserplatten, nämlich Gips- und/oder Zementfaserplatten sind.

3. Verwendung gemäss Anspruch 1, wobei die Klebstoffzusammensetzung im mit Wasser angemachten Zustand ein Einkomponenten-Klebstoff ist.

4. Verwendung gemäss Anspruch 1, wobei das mindestens eine zementalkalisch beständige redispergierbare Polymer Pulver in einer Konzentration von 40 Gew.-% bis 60 Gew.-% vorliegt.

5. Verwendung gemäss Anspruch 1, wobei das mindestens eine Polymer Pulver einen oder mehrere Vinylester einer Carbonsäure, bevorzugt der Essigsäure oder einer tertiären gesättigten Monocarbonsäure; ein oder mehrere Acrylate und/oder Methacrylate; Ethylen; Styrol; sowie Kombinationen dieser Monomere umfasst.

6. Verwendung gemäss Anspruch 1, wobei zusätzlich mindestens ein weiterer Hilfsstoff enthalten ist aus der Gruppe:
- Funktionale Additive, beispielsweise zur Regulierung des Wasserrückhaltevermögens;
- Rheologie-Modifikatoren;
- Additive zur Kontrolle der Abbindezeit.

7. Verwendung gemäss Anspruch 1, wobei die Zusammensetzung bereitgestellt ist in einem Mehrkammer-Gebinde, enthaltend
- in einer ersten Kammer
o mindestens ein zementalkalisch beständiges, redispergierbares Polymer Pulver, insbesondere in einem Anteil von mehr als 30 Gew.-%, vorzugsweise von mindestens 35 Gew.-%, besonders bevorzugt von mindestens 40 Gew.-%, jeweils bezogen auf die in dem Gebinde enthaltenen Feststoffe;
o mindestens ein hydraulisch härtendes Bindemittel auf Silikatbasis, vorzugsweise Zement;
∘ optional Wasserglas;
- in einer zweiten Kammer
∘ optional Wasser;
∘ optional Wasserglas;
wobei die erste und die zweite Kammer derart miteinander in Verbindung bringbar sind, dass in den Kammern getrennt bevorrateten Stoffe miteinander mischbar werden.

8. Verwendung gemäss Anspruch 1, wobei die Zusammensetzung bereitgestellt ist in einem Mehrkammer-Gebinde, enthaltend
- in einer ersten Kammer
∘ mindestens ein hydraulisch härtendes Bindemittel auf Silikatbasis, vorzugsweise Zement;
∘ optional Wasserglas;
- in einer zweiten Kammer
∘ mindestens eine wässrige Dispersion eines zementalkalisch beständigen, redispergierbaren Polymer Pulvers, insbesondere in einem Anteil von mehr als 30 Gew.-%, vorzugsweise von mindestens 35 Gew.-%, besonders bevorzugt von mindestens 40 Gew.-%, jeweils bezogen auf die in dem Gebinde enthaltenen Feststoffe;
∘ optional Wasserglas;
wobei die erste und die zweite Kammer derart miteinander in Verbindung bringbar sind, dass in den Kammern getrennt bevorrateten Stoffe miteinander mischbar werden.

9. Verfahren zum Verkleben von Faserplatten unter Verwendung einer Trockenmasse umfassend:
- ein zementalkalisch beständiges, redispergierbaren Polymer Pulvers, insbesondere in einem Anteil von mehr als 30 Gew.-%, vorzugsweise von mindestens 35 Gew.-%, besonders bevorzugt von mindestens 40 Gew.-%; und
- mindestens ein hydraulisch härtendes Bindemittel auf Silikatbasis, vorzugsweise Zement;
- optional Wasserglas;
in mit Wasser angemachtem Zustand, wobei die Trockenmasse unter Zugabe von Wasser zu einer Paste verarbeitet wird.

10. Verfahren gemäss Anspruch 9, **dadurch gekennzeichnet, dass** das Verhältnis Klebstoffzusammensetzung zu Wasser 3:1 beträgt.

## Claims

1. Use of a composition, more particularly dry compound, comprising:
- a cement-alkali-resistant, redispersible polymer powder, more particularly in a fraction of more than 30% by weight, preferably of at least 35% by weight, more preferably of at least 40% by weight; and
- at least one hydraulically curing, silicate-based binder, preferably cement;
- optionally waterglass;
in a state in which it has been mixed up with water, as an adhesive composition for bonding fibreboard panels to one another.

2. Use according to Claim 1, **characterized in that** the fibreboard panels are mineral fibreboard panels, specifically gypsum and/or cement fibreboard panels.

3. Use according to Claim 1, wherein the adhesive composition, in the state in which it has been mixed up with water, is a one-component adhesive.

4. Use according to Claim 1, wherein the at least one cement-alkali-resistant redispersible polymer powder is present in a concentration of 40% by weight to 60% by weight.

5. Use according to Claim 1, wherein the at least one polymer powder comprises one or more vinyl esters of a carboxylic acid, preferably of acetic acid or of a tertiary saturated monocarboxylic acid; one or more acrylates and/or methacrylates; ethylene; styrene; and also combinations of these monomers.

6. Use according to Claim 1, wherein there is additionally present at least one further auxiliary from the following group:
- functional additives, e.g. for regulating the water retention capacity;
- rheology modifiers;
- additives for controlling the setting time.

7. Use according to Claim 1, wherein the composition is provided in a multi-chamber container containing
- in a first chamber
o at least one cement-alkali-resistant, redispersible polymer powder, more particularly in a fraction of more than 30% by weight, preferably of at least 35% by weight, more preferably of at least 40% by weight, based in each case on the solids present in the container;
o at least one hydraulically curing, silicate-based binder, preferably cement;
∘ optionally waterglass;
- in a second chamber
∘ optionally water;
∘ optionally waterglass;
wherein it is possible for the first and second chambers to be brought into communication with one another such that substances stored separately within the chambers can be mixed with one another.

8. Use according to Claim 1, wherein the composition is provided in a multi-chamber container containing
- in a first chamber
o at least one hydraulically curing, silicate-based binder, preferably cement;
∘ optionally waterglass;
- in a second chamber
∘ at least one aqueous dispersion of a cement-alkali-resistant, redispersible polymer powder, more particularly in a fraction of more than 30% by weight, preferably of at least 35% by weight, more preferably of at least 40% by weight, based in each case on the solids present in the container;
∘ optionally waterglass;
wherein it is possible for the first and second chambers to be brought into communication with one another such that substances stored separately within the chambers can be mixed with one another.

9. Method for adhesively bonding fibreboard panels using a dry compound comprising:
- a cement-alkali-resistant, redispersible polymer powder, more particularly in a fraction of more than 30% by weight, preferably of at least 35% by weight, more preferably of at least 40% by weight; and
- at least one hydraulically curing, silicate-based binder, preferably cement;
- optionally waterglass;
in a state in which it has been mixed up with water, the dry compound being processed with addition of water to form a paste.

10. Method according to Claim 9, **characterized in that** the ratio of adhesive composition to water is 3:1.

## Revendications

1. Utilisation d'une composition, notamment d'une masse sèche, comprenant :
- une poudre polymère redispersible résistante au ciment alcalin, notamment en une proportion de plus de 30 % en poids, de préférence d'au moins 35 % en poids, de manière particulièrement préférée d'au moins 40 % en poids ; et
- au moins un liant durcissant par voie hydraulique à base de silicate, de préférence du ciment ;
- éventuellement du verre soluble ;
à l'état mélangé avec de l'eau en tant que composition adhésive pour le collage de panneaux de fibres les uns avec les autres.

2. Utilisation selon la revendication 1, **caractérisée en ce que** les panneaux de fibres sont des panneaux de fibres minérales, à savoir des panneaux de fibres de gypse et/ou de ciment.

3. Utilisation selon la revendication 1, dans laquelle la composition adhésive à l'état mélangé avec de l'eau est un adhésif monocomposant.

4. Utilisation selon la revendication 1, dans laquelle la ou les poudres polymères redispersibles résistantes au ciment alcalin sont présentes en une concentration de 40 % en poids à 60 % en poids.

5. Utilisation selon la revendication 1, dans laquelle la ou les poudres polymères comprennent un ou plusieurs esters de vinyle d'un acide carboxylique, de préférence de l'acide acétique ou d'un acide monocarboxylique saturé tertiaire ; un ou plusieurs acrylates et/ou méthacrylates ; de l'éthylène ; du styrène ; ainsi que des combinaisons de ces monomères.

6. Utilisation selon la revendication 1, dans laquelle au moins un adjuvant supplémentaire est également contenu, choisi dans le groupe constitué par :
- les additifs fonctionnels, par exemple pour la régulation de la capacité de rétention de l'eau ;
- les modificateurs de rhéologie ;
- les additifs pour l'ajustement du temps de prise.

7. Utilisation selon la revendication 1, dans laquelle la composition est préparée dans un contenant à plusieurs chambres, contenant :
- dans une première chambre :
- au moins une poudre polymère redispersible résistante au ciment alcalin, notamment en une proportion de plus de 30 % en poids, de préférence d'au moins 35 % en poids, de manière particulièrement préférée d'au moins 40 % en poids, à chaque fois par rapport aux solides contenus dans le contenant ;
- au moins un liant durcissant par voie hydraulique à base de silicate, de préférence du ciment ;
- éventuellement du verre soluble ;
- dans une seconde chambre :
- éventuellement de l'eau ;
- éventuellement du verre soluble ;
la première et la seconde chambre pouvant être connectées l'une avec l'autre de manière à pouvoir mélanger les unes avec les autres les substances stockées séparément dans les chambres.

8. Utilisation selon la revendication 1, dans laquelle la composition est préparée dans un contenant à plusieurs chambres, contenant :
- dans une première chambre :
- au moins un liant durcissant par voie hydraulique à base de silicate, de préférence du ciment ;
- éventuellement du verre soluble ;
- dans une seconde chambre :
- au moins une dispersion aqueuse d'une poudre polymère redispersible résistante au ciment alcalin, notamment en une proportion de plus de 30 % en poids, de préférence d'au moins 35 % en poids, de manière particulièrement préférée d'au moins 40 % en poids, à chaque fois par rapport aux solides contenus dans le contenant ;
- éventuellement du verre soluble ;
la première et la seconde chambre pouvant être connectées l'une avec l'autre de manière à pouvoir mélanger les unes avec les autres les substances stockées séparément dans les chambres.

9. Procédé de collage de panneaux de fibres utilisant une masse sèche comprenant :
- une poudre polymère redispersible résistante au ciment alcalin, notamment en une proportion de plus de 30 % en poids, de préférence d'au moins 35 % en poids, de manière particulièrement préférée d'au moins 40 % en poids ; et
- au moins un liant durcissant par voie hydraulique à base de silicate, de préférence du ciment ;
- éventuellement du verre soluble ;
à l'état mélangé avec de l'eau, la masse sèche étant transformée en une pâte par ajout d'eau.

10. Procédé selon la revendication 9, **caractérisé en ce que** le rapport entre la composition adhésive et l'eau est de 3:1.
